# EUROPÄISCHE PATENTSCHRIFT

(11) **EP 1 861 952 B1**
(45) Veröffentlichungstag und Bekanntmachung des Hinweises auf die Patenterteilung: **22.10.2008**
(21) Anmeldenummer: 06701148.6
(22) Anmeldetag: 09.01.2006
(51) Int. Cl.: H04L 12/24

(54) **VERFAHREN ZUM LOKALISIEREN DER HERKUNFT VON STÖRUNGSZUSTÄNDEN**
PROCESS FOR LOCATING THE ORIGIN OF DISTURBING STATES
PROCEDE POUR LOCALISER L'ORIGINE DES ETATS DE PERTURBATIONS

(30) Priorität: 11.03.2005 DE 102005011387
(43) Veröffentlichungstag der Anmeldung: 05.12.2007
(73) Patentinhaber: BSH Bosch und Siemens Hausgeräte GmbH, 81739 München (DE)
(72) Erfinder: BUCHNER, Theo, 93333 Neustadt (DE); HERTEL, Udo, 93059 Regensburg (DE)
(86) Internationale Anmeldenummer: PCT/EP2006/050088
(87) Internationale Veröffentlichungsnummer: WO 2006/094844

(56) Entgegenhaltungen:
- DE-A1- 10 313 360
- US-A1- 2004 223 461
- US-B1- 6 182 249
- US-B1- 6 862 698

## Beschreibung

Die Erfindung bezieht sich auf ein Verfahren und eine Vorrichtung zum Lokalisieren der Herkunft von die Erreichbarkeit und/oder den Betrieb von an einer ersten Netzwerkanordnung über Netzzugangseinrichtungen angeschlossenen Geräten, insbesondere von netzfähigen Hausgeräten beeinträchtigenden Störungszuständen, die gegebenenfalls durch zumindest eines der Geräte verursacht sind, welche an der betreffenden ersten Netzwerkanordnung angeschlossen sind, mit der zumindest eine zu wenigstens einer weiteren Netzwerkanordnung hinführende Netzübergangseinrichtung verbunden ist, in der die Adressen der an der ersten Netzwerkanordnung angeschlossenen Geräte auf deren Anmeldung in der jeweiligen Netzübergangseinrichtung gespeichert werden.

Es ist bereits ein Verfahren zur Bedienung bzw. zum Betrieb und/oder zur Überwachung von mit elektronischen Steuerungen zur Fortschaltung von Programmen ausgerüsteten Haushaltgeräten bekannt (DE 40 04 097 A1). Bei diesem bekannten Verfahren werden während des gesamten Ablaufs eines Programms die der Steuerung zugeführten Messwerte mit im Speicher eines externen Rechners abgelegten Sollwerten verglichen. Bei Überschreiten einer Toleranzgrenze erfolgt eine Fehlermeldung. Bei leichten Fehlern erfolgt die Anzeige einer Wartungsmaßnahme, ansonsten wird das Programm unterbrochen, und der aufgetretene Fehler und der Programmschritt, in dem er aufgetaucht ist, werden gespeichert. Diese Information kann dann zu einem späteren Zeitpunkt mit einem Kundendienstprogramm abgerufen werden. Dabei können auch Maßnahmen zur Beseitigung der aufgetretenen Störungen vorgeschlagen werden. Voraussetzung dabei ist jedoch, wie oben erwähnt, ein Istwert-Sollwert-Vergleich bezüglich des jeweiligen Programms. Ein Verfahren bei welchem ein Hausgerät über eine Busleitung andere Hausgeräte über seinen Zustand informiert, ist aus DE 103 13 360 A1 bekannt.

Es kann nun aber vorkommen, dass bei in einer Mehrzahl an einer Netzwerkanordnung angeschlossenen Geräten und insbesondere netzfähigen Hausgeräten die Erreichbarkeit und/oder der Betrieb zumindest eines dieser Geräte bzw. Hausgeräte durch einen Störungszustand beeinträchtigt ist. Unter einem netzfähigen Hausgerät wird hier mit wenigen Worten gesagt ein solches Hausgerät verstanden, welches über die Netzwerkanordnung, an der es angeschlossen ist, Steuerungs- und/oder Abfragebefehle zur Steuerung bzw. Abfrage seiner Betriebszustände erhalten kann. Wenn also die Erreichbarkeit und/oder der Betrieb eines solchen Gerätes durch wenigstens einen Störungszustand beeinträchtigt ist, wird man versuchen, die Ursache für den Störungszustand zu ermitteln bzw. dessen Herkunft zu lokalisieren. Dazu ist bisher der Einsatz von geschultem Wartungspersonal erforderlich, welches sämtliche an der erwähnten Netzwerkanordnung angeschlossenen Geräte nacheinander vor Ort mit entsprechenden Messmitteln untersucht. Dies stellt indessen eine recht aufwendige Vorgehensweise dar, um die Herkunft von Störungszuständen der erwähnten Art lokalisieren zu können.

Der Erfindung liegt daher die Aufgabe zugrunde, einen Weg zu zeigen, wie bei einem Verfahren und einer Vorrichtung der eingangs genannten Art die Herkunft von Störungszuständen der zuvor betrachteten Art leichter und ohne großen Personaleinsatz lokalisiert werden kann.

Gelöst wird die vorstehend aufgezeigte Aufgabe bei einem Verfahren der eingangs genannten Art erfindungsgemäß dadurch, dass von den in wenigstens einer der Netzübergangseinrichtungen jeweils angemeldeten Geräten in bestimmten festgelegten Zeitabständen Betriebszustände abgefragt und diesen entsprechende Abfragewerte in der betreffenden Netzübergangseinrichtung gespeichert werden,
dass bei Meldung des Vorliegens eines Störungszustands in zumindest einem der in wenigstens einer der Netzübergangseinrichtungen angemeldeten Geräte die Abfragewerte der in der betreffenden Netzübergangseinrichtung angemeldeten Geräte innerhalb einer festlegbaren Abfrage-Zeitspanne, die frühestens zu dem Zeitpunkt beginnt, zu dem das nunmehr gestörte Gerät noch störungsfrei arbeitete, für eine Auswertung erfasst werden
und dass die so erfassten Abfragewerte nach festlegbaren Kriterien in Gruppen zusammengestellt und die zu der jeweiligen Gruppe von Abfragewerten gehörenden Geräte (HG1 bis HGn) entsprechend einer festgelegten Reihenfolge der betreffenden Gruppen als für die Verursachung des gemeldeten Störungszustandes in Frage kommende Geräte bestimmt werden.

Die Erfindung bringt den Vorteil mit sich, dass auf besonders einfache Weise und ohne einen großen Personal- und Messmitteleinsatz vor Ort, also bei den an der genannten ersten Netzwerkanordnung angeschlossenen Geräten ausgekommen werden kann, um dennoch die Erreichbarkeit und/oder den Betrieb von an dieser Netzwerkanordnung über Netzzugangseinrichtungen angeschlossenen Geräten beeinträchtigende Störungszustände so eingrenzen zu können, dass eine Lokalisierung der Herkunft der betreffenden Störungszustände ermöglicht, zumindest aber erleichtert ist.

So können innerhalb der erwähnten festlegbaren Abfrage-Zeitspanne die Abfragezustände sämtlicher an der betreffenden ersten Netzwerkanordnung angeschlossenen Geräte für die Lokalisierung der Herkunft eines oder mehrerer Störungszustände beispielsweise nach verschiedenen Kriterien klassifiziert werden. Dabei können an Hand der so erfassten Abfragewerte beispielsweise diejenigen Geräte, die sich während der genannten Erfassungs-Zeitspanne in zumindest einer der Übergangseinrichtungen neu angemeldet haben, zunächst als für die Verursachung eines gemeldeten Störungszustands in Frage kommende Geräte bestimmt werden. Bezüglich dieser Geräte ist nämlich die Wahrscheinlichkeit besonders hoch dafür, dass durch sie ein gemeldeter Störungszustand oder gemeldete Störungszustände verursacht worden sind.

Sollten sich diese Geräte, die sich also während der genannten Erfassungs-Zeitspanne in zumindest einer der Netzübergangseinrichtungen neu angemeldet haben, nicht als Störungsquelle in Frage kommen oder haben sich solche Geräte während der genannten Erfassungs-Zeitspanne dort nicht angemeldet, so können in zweckmäßiger Weise solche Geräte als mögliche Störungsquellen bestimmt werden, die während der genannten Erfassungs-Zeitspanne in Betrieb waren. Für den Fall, dass auch diese Geräte, die also während der genannten Erfassungs-Zeitspanne in Betrieb waren, nicht als Störungsquellen in Frage kommen, bleiben lediglich diejenigen Geräte als mögliche Störungsquellen übrig, die während der betreffenden Erfassungs-Zeitspanne nicht in Betrieb waren. Dazu gehört auch das jeweilige Gerät, bezüglich dessen das Vorliegen eines Störungszustands gemeldet worden ist.

Auf diese Weise kann eine Lokalisierung der Herkunft von die Erreichbarkeit und/oder den Betrieb von an der erwähnten ersten Netzwerkanordnung über Netzzugangseinrichtungen angeschlossenen Geräten und insbesondere von netzfähigen Hausgeräten beeinträchtigenden Störungszuständen gewissermaßen wahrscheinlichkeitsabhängig durchgeführt werden: zuerst werden diejenigen Geräte als mögliche Störquellen bestimmt, bei denen die Wahrscheinlichkeit für die Verursachung eines oder mehrerer Störungszustände am höchsten ist. Bei Nichtverursachung von Störungszuständen durch Geräte dieser Gruppe werden sodann Geräte derjenigen Gruppe als mögliche Störquellen bestimmt, welche die nächstniedere Wahrscheinlichkeit für eine Störungsverursachung besitzen. In entsprechender Weise können so sämtliche an der erwähnten ersten Netzwerkanordnung angeschlossenen Geräte bei Bedarf als mögliche Störquellen bestimmt werden.

Vorzugsweise werden die zu den jeweils zusammengestellten Gruppen gehörenden Geräte gesondert angesteuert, und im Zuge dieser Ansteuerung wird eine kontrollierte Überwachung des Betriebszustandes des Gerätes vorgenommen, bezüglich dessen das Vorliegen eines Störungszustands gemeldet worden war. Im Zuge der genannten Ansteuerung können die als mögliche Störquellen bestimmten Geräte gezielt von der Netzwerkanordnung genommen werden und dabei kann dann das Verhalten des jeweiligen Gerätes kontrolliert bzw. überwacht werden, bezüglich dessen das Vorliegen eines Störungszustands gemeldet worden war.

Vorzugsweise erfolgen die Erfassung der genannten Geräte und die Bestimmung der für den jeweils gemeldeten Störungszustand als mögliche Störungsquellen in Frage kommenden Geräte in zumindest einer der vorhandenen Netzübergangseinrichtungen. Dies bringt den Vorteil einer besonders einfachen Steuerung mit sich, da in der betreffenden einen Netzübergangseinrichtung oder sogar in sämtlichen Netzübergangseinrichtungen die betreffenden Geräte angemeldet sind.

Alternativ zu der gerade betrachteten zweckmäßigen Weiterbildung der Erfindung ist es gemäß weiterer vorteilhafter Ausgestaltung des Verfahrens gemäß der Erfindung möglich, dass die Erfassung der genannten Geräte und die Angabe der für den jeweils gemeldeten Störungszustand als mögliche Störungsquellen in Frage kommenden Geräte in einer mit einer der vorhandenen Netzübergangseinrichtungen verbindbaren Steuerungs- und Auswertungseinrichtung bestimmt werden. Dadurch ergibt sich der Vorteil, dass die als mögliche Störungsquellen in Frage kommenden Geräte außerhalb der betrachteten Netzwerkanordnung, beispielsweise in einem gesonderten Personalcomputer bestimmt werden können, der für die Überwachung und Steuerung der erwähnten Geräte verwendbar ist.

Gemäß einer noch weiteren zweckmäßigen Weiterbildung des Verfahrens gemäß der vorliegenden Erfindung werden die Abfragewerte von jedem der genannten Geräte, die also an der genannten ersten Netzwerkanordnung angeschlossen sind, in einem in zumindest einer der Netzübergangseinrichtungen vorgesehenen, als Durchlaufspeicher oder als Ringspeicher mit festgelegter bestimmter Speicherkapazität betriebenen Speicher, der insbesondere aus geräteindividuellen Teilspeichern oder aus einem Speicher mit geräteindividuellen Speicherabschnitten gebildet ist, gespeichert. Dadurch ergibt sich der Vorteil eines relativ einfachen Zugriffs auf die für die jeweiligen Geräte gespeicherten Abfragewerte.

Zur Durchführung des Verfahrens gemäß der vorliegenden Erfindung dient vorzugsweise eine Vorrichtung der eingangs genannten Art, die dadurch gekennzeichnet ist, dass in zumindest einer der Netzübergangseinrichtungen eine Abfrage- und Speichereinrichtung enthalten ist, in der den zu festgelegten Zeitpunkten abgefragten Zuständen der an der genannten ersten Netzwerkanordnung angeschlossenen Geräte entsprechende Abfragewerte abspeicherbar sind,
dass bei Meldung des Vorliegens eines Störungszustands in zumindest einem der in wenigstens einer der Netzübergangseinrichtungen angemeldeten Geräte von der Abfrage- und Speichereinrichtung zumindest einer der Netzübergangseinrichtungen die Abfragewerte der in der betreffenden Netzübergangseinrichtung angemeldeten Geräte innerhalb einer festlegbaren Abfrage-Zeitspanne, die frühestens zu dem Zeitpunkt beginnt, zu dem das nunmehr gestörte Gerät noch störungsfrei arbeitete, für eine Auswertung bereitstellbar sind
und dass eine Auswerteeinrichtung vorgesehen ist, welche die so erfassten Abfragewerte nach festlegbaren Kriterien in Gruppen zusammenstellt und die zu der jeweiligen Gruppe von Abfragewerten gehörenden Geräte entsprechend einer festgelegten Reihenfolge der betreffenden Gruppen als für die Verursachung des gemeldeten Störungszustandes in Frage kommende Geräte bestimmt.

Hierdurch ergibt sich der Vorteil eines besonders geringen Aufwands für die Lokalisierung der Herkunft von die Erreichbarkeit und/oder den Betrieb von an der genannten ersten Netzwerkanordnung über Netzzugangseinrichtungen angeschlossenen Geräten, insbesondere von netzfähigen Hausgeräten beeinträchtigenden Störungszuständen. Es wird nämlich mit einer relativ einfachen Abfrage- und Speichereinrichtung und einer Auswerteeinrichtung ausgekommen, um die als mögliche Störungsquellen in Frage kommenden Geräte zu bestimmen.

Vorzugsweise ist die Auswerteeinrichtung in zumindest einer der Netzübergangseinrichtungen enthalten. Dies bringt den Vorteil eines besonders geringen Schaltungsaufwands mit sich.

Alternativ dazu kann die Auswerteeinrichtung mit der jeweiligen Netzübergangseinrichtung verbindbar sein. Dies ermöglicht in besonders einfacher Weise eine externe Auswerteeinrichtung einzusetzen.

Dabei kann die Auswerteeinrichtung vorzugsweise mit einer der Netzübergangseinrichtungen über eine gesonderte Netzwerkanordnung verbindbar sein. Als solche Auswerteeinrichtung lässt sich somit in vorteilhafter Weise ein für Steuerungs- und Überwachungsaufgaben genutzter Personalcomputer verwenden.

Vorzugsweise ist gemäß weiterer Ausgestaltung der vorliegenden Erfindung für die Speicherung der jeweiligen Abfragewerte von jedem der genannten Geräte ein in zumindest einer der Netzübergangseinrichtungen angeordneter, als Durchlaufspeicher oder als Ringspeicher mit festgelegter bestimmter Speicherkapazität betriebener Speicher vorgesehen, der insbesondere durch geräteindividuelle Teilspeicher gebildet ist oder der geräteindividuelle Speicherabschnitte enthält. Hierdurch ergibt sich der Vorteil eines relativ geringen Speicheraufwands für die Speicherung der jeweiligen Abfragewerte von den genannten Geräten.

An Hand von Zeichnungen wird die Erfindung nachstehend an einem Ausführungsbeispiel näher erläutert.
- Fig. 1: zeigt in einer schematischen Darstellung Netzwerkanordnungen, an deren einer eine Mehrzahl von netzfähigen Hausgeräten angeschlossen ist und die durch Netzübergangseinrichtungen miteinander verbunden sind.
- Fig. 2: zeigt in einer schematischen Ansicht einen möglichen Aufbau einer der Netzübergangseinrichtungen.
- Fig. 3: zeigt in einer schematischen Ansicht eine mögliche Konfiguration einer für die in Fig. 2 dargestellte Übergangseinrichtung verwendbaren Speicheranordnung.

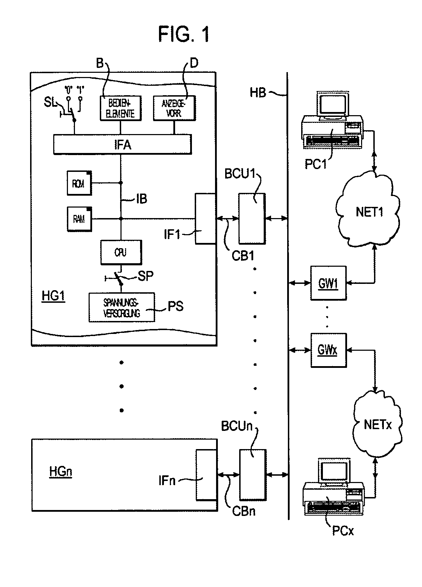

In Fig. 1 ist schematisch eine Mehrzahl von Geräten, und zwar insbesondere von netzfähigen Hausgeräten HG1 bis HGn dargestellt, die mittels Anschlussleitungen CB1 bis CBn an Netzzugangseinrichtungen in Form von Buskoppeleinheiten oder Buskopplern BCU1 bis BCUn angeschlossen und über diese mit einer ersten Netzwerkanordnung HB verbunden sind, die hier durch einen sogenannten Heim- oder Hausbus gebildet ist. Es sei an dieser Stelle angemerkt, dass die in Fig. 1 gezeigte Anordnung prinzipiell Anordnungen entspricht, wie sie bereits in BSH-Patentanmeldungen (entsprechend DE 103 13 360 A1) gezeigt und erläutert sind. Aus diesem Grunde wird die in Fig. 1 dargestellte Anordnung hier nur in dem für ein Verständnis der vorliegenden Erfindung erforderlichen Umfange erläutert.

Die zuvor erwähnte erste Netzwerkanordnung HB, die beispielsweise durch das Stromnetz gebildet sein kann, an welchem die Hausgeräte HG1 bis HGn angeschlossen sind, ist über Netzübergangseinrichtungen GW1 bis GWx, welche auch als Gateways bezeichnet werden, im vorliegenden Fall mit weiteren Netzwerkanordnungen NET1 bis NETx verbunden, mit denen externe Steuerungs- und/oder Überwachungsgeräte, wie Personalcomputer PC1 bis PCx verbindbar sind. Bei der weiteren Netzwerkanordnung NET1 kann es sich beispielsweise um das Internet handeln, und bei der weiteren Netzwerkanordnung NETx kann es sich beispielsweise um ein öffentliches Vermittlungsnetz handeln.

Bei den in Fig. 1 angedeuteten Hausgeräten HG1 bis HGn handelt es sich beispielsweise um zu einem Haushalt oder zu mehreren Haushalten gehörende gleichartige oder unterschiedliche Hausgeräte, wie beispielsweise um eine oder mehrere Waschmaschinen, um einen oder mehrere Elektroherde, um einen oder mehrere Geschirrspüler, um ein oder mehrere Mikrowellengeräte, um einen oder mehrere Gefrierschränke, um eine oder mehrere Dunstabzugshauben, um eine oder mehrere Klimaanlagen, um eine oder mehrere Kaffeemaschinen, um einen oder mehrere Staubsauger, um eine oder mehrere Kochmulden, um einen oder mehrere Kühlschränke, etc. Die betreffenden Hausgeräte HG1 bis HGn sind hier nicht im Einzelnen dargestellt. Vielmehr sind lediglich die für ein Verständnis der vorliegenden Erfindung notwendigen Elemente gezeigt, und zwar genauer gesagt lediglich für das Hausgerät HG1.

Zu den vorstehend erwähnten Elementen des Hausgeräts HG1 gehört unter anderem eine Zentraleinheit CPU, die an einem internen Bus IB angeschlossen ist, an dem ferner ein Festwertspeicher ROM und ein Schreib-Lese-Speicher RAM sowie über eine hausgerät-interne parallel oder seriell betriebene bidirektionale Schnittstelleneinrichtung IFA eine Anzeigeeinrichtung D und Bedienungselemente B angeschlossen sind. In dem Festwertspeicher ROM können für den Betrieb des Hausgeräts HG1 dienende Arbeitsprogramme gespeichert sein, die mit Hilfe der Zentraleinheit CPU ausführbar sind. Der Schreib-Lese-Speicher RAM dient im Zuge der Ausführung derartiger Arbeitsprogramme als Arbeitsspeicher des dargestellten Rechnersystems. Die Zentraleinheit CPU kann hier zusammen mit den Speichern ROM und RAM noch zur Bereitstellung von den jeweiligen Betriebszustand des betreffenden Hausgeräts anzeigenden Zustandswerten herangezogen werden, die, wie noch ersichtlich werden wird, von dem jeweiligen Hausgerät als Abfragewerte abfragbar sind.

Die Zentraleinheit CPU ist über einen in Fig. 1 angedeuteten Schalter SP an einer Spannungsversorgungseinrichtung PS angeschlossen, die entweder die Spannungsversorgungseinrichtung des Hausgeräts HG1 sein kann, wie beispielsweise die Netzspannungsversorgungseinrichtung dieses Hausgerätes, oder die auch eine eigene bzw. gesonderte Spannungsversorgungseinrichtung (z.B. eine Batterie) dieses Hausgerätes HG1 sein kann. Im zuletzt erwähnten Falle steht die Spannungsversorgungseinrichtung PS beispielsweise auch bei einem Ausfall der für den Betrieb des betreffenden Hausgerätes HG1 dienenden Versorgungs- bzw. Netzspannung noch zur Verfügung. Dadurch können dann von dem dargestellten hausgerät-internen Rechnersystem (CPU, ROM, RAM) bestimmte Zustands- bzw. Meldesignale für eine mögliche Fernabfrage und gemäß der vorliegenden Erfindung den jeweiligen Betriebszustand des betreffenden Hausgerätes angebende Zustands- bzw. Abfragesignale bereitgestellt werden. Solche Zustands- bzw. Abfragesignale werden von den jeweiligen Hausgeräten in bestimmten festgelegten Zeitabständen abgefragt.

Mit dem internen Bus IB des Hausgerätes HG1, der üblicherweise eine mehrere Einzelleiter umfassende Busleitungsanordnung darstellt, ist im vorliegenden Fall noch eine bidirektional betriebene Schnittstelleneinrichtung IF1 verbunden, die für Kommunikationsverbindungen zu und von dem betreffenden Hausgerät HG1 dient. Diese Schnittstelleneinrichtung IF1 kann beispielsweise eine serielle Schnittstelleneinrichtung oder eine parallele Schnittstelleneinrichtung sein, wie sie für die Datenübertragung üblicherweise eingesetzt wird. Über diese Schnittstelleneinrichtung IF1 kann beispielsweise die zuvor erwähnte Abfrage der Betriebszustände des betreffenden Hausgerätes erfolgen.

Mit der weiter oben erwähnten Schnittstelleneinrichtung IFA des Hausgeräts HG1 ist noch eine mechanische Schalteinrichtung SL verbunden, die gewöhnlich an nicht leicht erreichbarer Stelle im Hausgerät HG1 angeordnet ist (und die normalerweise nur für Service-Personal zugänglich ist). Die betreffende mechanische Schalteinrichtung SL ist hier in zwei unterschiedlichen Schaltstellungen einstellbar; in der einen Schaltstellung gibt sie ein einem Verknüpfungssignal bzw. Bit "0" entsprechendes Signal an die Schnittstelleneinrichtung IFA ab, und in ihrer anderen Schaltstellung gibt sie ein einem Verknüpfungssignal bzw. Bit "1" entsprechendes Signal an die Schnittstelleneinrichtung IFA ab. Auf die Abgabe eines solchen Signals hin erfolgt eine hier nicht näher beschriebene Registrierungs- und Anmeldungsprozedur in der zugehörigen Netzzugangseinrichtung - also im Falle des Hausgeräts HG1 in der Netzzugangseinrichtung BCU1 - und in wenigstens einer der Netzübergangseinrichtungen GW1 bis GWx. Diese Prozeduren werden hier, da sie in den oben erwähnten beiden BSH-Patentanmeldungen im Einzelnen beschrieben wurden, nicht weiter betrachtet.

Zu dem in Fig. 1 schematisch angedeuteten Hausgerät HGn ist anzumerken, dass dieses schaltungsmäßig in gleicher Weise aufgebaut sein kann wie das Hausgerät HG1. Das Hausgerät HGn ist mit einer eigenen bidirektional betriebenen Schnittstelleneinrichtung IFn entsprechend der zuvor erwähnten Schnittstelleneinrichtung IF1 ausgestattet. Diese Schnittstelleneinrichtung IFn kann ebenfalls eine parallele oder serielle Schnittstelleneinrichtung sein.

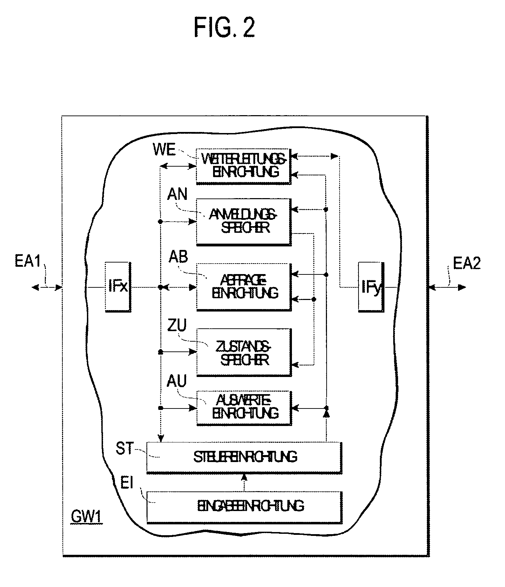

In Fig. 2 ist in einem schematischen Diagramm ein möglicher Aufbau einer der in Fig. 1 angedeuteten Netzübergangseinrichtungen, und zwar der Netzübergangseinrichtung GW1 im Hinblick auf die Realisierung der vorliegenden Erfindung veranschaulicht. Die in Fig. 2 dargestellte Netzübergangseinrichtung GW1 weist einen ersten Eingangs-Ausgangs-Anschluss EA1 und einen zweiten Eingangs-Ausgangs-Anschluss EA2 auf. Mit ihrem ersten Eingangs-Ausgangs-Anschluss EA1 ist die Netzübergangseinrichtung GW1 an der in Fig. 1 dargestellten ersten Netzwerkanordnung HB angeschlossen, und mit ihrem zweiten Eingangs-Ausgangs-Anschluss EA2 ist die Netzübergangseinrichtung GW1 mit der in Fig. 1 dargestellten weiteren Netzwerkanordnung NET1 verbunden.

In dem in Fig. 2 nur ausschnittweise dargestellten Bereich enthält die Netzübergangseinrichtung GW1 eine mit dem ersten Eingangs-Ausgangs-Anschluss EA1 verbundene, bidirektional betriebene Schnittstelleneinrichtung IFx, mit der nachstehend näher zu betrachtende Einrichtungen verbunden sind. In entsprechender Weise ist der Eingangs-Ausgangs-Anschluss EA2 der Netzübergangseinrichtung GW1 mit einer bidirektional betriebenen Schnittstelleneinrichtung IFy verbunden, die im vorliegenden Fall mit einer Eingangs- und Ausgangsseite einer Weiterleitungseinrichtung WE verbunden ist, welche mit einem weiteren Eingangs-Ausgangs-Anschluss mit der zuerst erwähnten Schnittstelleneinrichtung IFx verbunden ist. Diese Weiterleitungseinrichtung WE dient zur Weiterleitung verschiedenster Signale und Befehle zwischen den beiden Netzwerkanordnungen HB und NET1 sowie zwischen an diesen angeschlossenen Geräten bzw. Einrichtungen.

Mit der Schnittstelleneinrichtung IFx sind in der Netzübergangseinrichtung GW1 ein Anmeldungsspeicher AN eingangsseitig, eine Abfrageeinrichtung AB eingangs- und ausgangsseitig, ein Zustandspeicher ZU eingangsseitig und eine Auswerteeinrichtung AU eingangsseitig verbunden. Ferner ist mit der Schnittstelleneinrichtung IFx eine Steuereinrichtung ST eingangsseitig verbunden, die eingangsseitig ferner mit einer Eingabeeinrichtung EI verbunden ist, bei der es sich beispielsweise um eine Tastatur-Eingabeeinrichtung handeln kann. Mittels dieser Eingabeeinrichtung EI können verschiedene Steuerprogramme in der Steuereinrichtung ST festgelegt und zur Ausführung angestoßen werden.

Die Steuereinrichtung ST ist ausgangsseitig mit Steuereingängen der Weiterleitungseinrichtung WE, des Anmeldungsspeichers AN, der Abfrageeinrichtung AB und der mit der Ausgangsseite des Zustandsspeichers ZU verbundenen Auswerteeinrichtung AU verbunden. Über diese Verbindung können die erwähnten Einrichtungen von der Steuereinrichtung ST her zur Ausführung von unterschiedlichen Vorgängen gesteuert werden, wie sie nachstehend noch näher ersichtlich werden wird.

Die zuvor erwähnte Abfrageeinrichtung AB und der zuvor erwähnte Zustandsspeicher ZU sind gemäß Fig. 2 eingangsseitig mit einem Ausgang des Anmeldungsspeichers AN verbunden. Über diese Verbindung erhalten die Abfrageeinrichtung AB und der Zustandsspeicher ZU von dem Anmeldungsspeicher AN zum Zeitpunkt der jeweiligen Zustandsabfrage eines Hausgerätes die im Anmeldungsspeicher AN gespeicherte Adresse des jeweiligen Hausgeräts zugeführt. Mit dieser Adresse kann dann der Betriebszustand des jeweiligen Hausgeräts abgefragt und das dem jeweiligen Betriebszustand entsprechende Abfragesignal bzw. Zustandssignal im Zustandsspeicher ZU für das betreffende Hausgerät gespeichert werden. Diese Vorgänge laufen unter der Steuerung der Steuereinrichtung ST ab.

Mit der so in zumindest einer der in Fig. 1 vorgesehenen Netzübergangseinrichtungen GW1 bis GWx vorgesehenen Abfrage- und Speichereinrichtung, welche die in Fig. 2 dargestellte Abfrageeinrichtung AB und die in Fig. 2 dargestellte Speicher AN und ZU umfasst, werden gemäß der vorliegenden Erfindung den zu festgelegten Zeitpunkten abgefragten Zuständen der an der ersten Netzwerkanordnung HB angeschlossenen Hausgeräte HG1 bis HGn entsprechende Abfragewerte geräteindividuell erfasst und abgespeichert, und zwar im vorliegenden Fall im Zustandsspeicher ZU. Bezüglich der Abfrage von Zuständen von Hausgeräten zu festgelegten Zeitpunkten sei hier noch angemerkt, dass diese Abfrage beispielsweise eine zyklisch wiederholte Abfrage der in der jeweiligen Netzübergangseinrichtung angemeldeten Hausgeräte sein kann. Der Zyklustakt der Abfrage von einem Hausgerät zum nächsten Hausgerät kann beispielsweise 1 min betragen. In die betreffende Abfrage sind im übrigen auch solche angemeldeten Hausgeräte eingeschlossen, die nach ihrer Anmeldung nicht mehr zu finden sind.

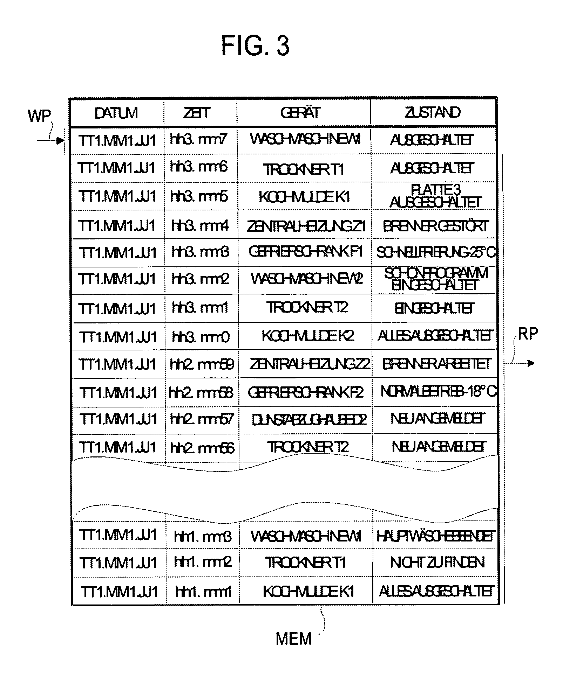

Fig. 3 veranschaulicht eine in dem gerade betrachteten Zusammenhang einsetzbare Speicheranordnung MEM, in der die Funktionen der in Fig. 2 angedeuteten Anmeldungs-und Zustandsspeicher AN, ZU zusammengefasst sind. Die in Fig. 3 dargestellte Speicheranordnung weist einen Schreibanschluss WP und einen Leseanschluss RP auf. Die betreffende Speicheranordnung MEM ist beispielsweise in vier Speicherspalten und eine Vielzahl von Speicherzeilen organisiert. Über den Schreibanschluss WP können Daten jeweils nur in die bezeichnete oberste Speicherzeile geschrieben werden; diese Daten werden dann beim anschließenden Schreiben von weiteren Daten in diese Speicherzeile um eine Speicherzeile nach unten in Fig. 3 verschoben. Entsprechende Verschiebevorgänge finden bei jedem erneuten Schreiben von Daten in die oberste Speicherzeile der Speicheranordnung MEM bezüglich sämtlicher zuvor in diese Speicheranordnung geschriebenen Daten statt. Die Speicheranordnung MEM stellt somit einen Durchlaufspeicher mit festgelegter bestimmter Speicherkapazität dar, in welchen in der in Fig. 3 dargestellten obersten Speicherzeile der zum letzten Abfragezeitpunkt von einem der Hausgeräte HG1 bis HGn ermittelte Betriebszustand bzw. der diesem entsprechende Abfragewert gespeichert ist. In der in Fig. 1 dargestellten untersten Speicherzeile ist der zum ältesten Abfragezeitpunkt von einem der Hausgeräte HG1 bis HGn ermittelte Betriebszustand bzw. die diesem entsprechenden Abfragewerte gespeichert. Innerhalb der Speicheranordnung MEM können den einzelnen Hausgeräten individuelle Speicherabschnitte zugeordnet sein.

Der zuvor erwähnte Leseanschluss RP erstreckt sich über sämtliche Speicherzeilen der Speicheranordnung MEM. Über diesen Leseanschluss RP können die Inhalte sämtlicher Speicherzeilen gezielt nach bestimmten Kriterien oder komplett ausgelesen werden.

Bezüglich der Speicheranordnung MEM sei hier noch angemerkt, dass diese in Abweichung von der vorstehend erläuterten Struktur gegebenenfalls auch als Ringspeicher mit festgelegter bestimmter Speicherkapazität ausgelegt sein kann, in welchem der jeweils älteste eingeschriebene Betriebszustand eines Hausgerätes durch den neuesten Betriebszustand eines Hausgerätes überschrieben wird.

Im übrigen kann die Speicheranordnung MEM gegebenenfalls auch durch geräteindividuelle Teilspeicher gebildet sein, die selbst als Durchlauf- oder Ringspeicher aufgebaut sein können.

In den auf der linken Seite in Fig. 3 dargestellten beiden Speicherspalten werden das Datum und die Zeit der jeweiligen Abfrage in der obersten Speicherzeile festgehalten. Mit TT1.MM1.JJ1 ist dabei eine zweistellige Angabe von Tag, Monat und Jahr des jeweiligen Abfragedatums angegeben. Als Zeitangabe sind in der Spalte Zeit in Fig. 3 Angaben von hh1.mm1 bis hh3.mm7 enthalten, was beispielsweise die Bedeutung haben mag von Stunde 1, Minute 1 bis Stunde 3, Minute 7, jeweils in zweistelliger Darstellung.

In der dritten Speicherspalte in der Speicheranordnung MEM gemäß Fig. 3 wird in der ersten Speicherzeile das jeweilige Gerät, das heißt dessen Adresse oder eine sonstige Angabe darüber festgehalten. Bezogen auf die in Fig. 2 dargestellte Anordnung stammen solche Angaben aus dem dort angedeuteten Anmeldungsspeicher AN. Im vorliegenden Fall sind in der betreffenden dritten Speicherspalte die Bezeichnungen der in der zugehörigen Netzübergangseinrichtung jeweils angemeldeten Hausgeräte enthalten, wie Trockner T2, Dunstabzugshaube D2, Gefrierschrank F2, Zentralheizung Z1, Kochmulde K2, Waschmaschine W2, Gefrierschrank F1, Zentralheizung Z1, Kochmulde K1, Trockner T1 und Waschmaschine W1. Dabei sind in der Speicheranordnung MEM gemäß Fig. 3 Hausgeräte beispielsweise zweier Haushalte oder Häuser erfasst.

In der in Fig. 3 ganz rechts dargestellten vierten Speicherspalte wird der Zustand, das heißt der jeweils abgefragte Zustand bzw. Betriebszustand des jeweiligen Hausgeräts in der ersten Speicherzeile eingespeichert. Diese Zustände umfassen beispielsweise "alles ausgeschaltet", "nicht zu finden", "Hauptwäsche beendet", "neu angemeldet", "Normalbetrieb -18°C", "Brenner arbeitet", "eingeschaltet", "Schonprogramm eingeschaltet", "Schnellfrierung -25°C", "Brenner gestört", "Platte 3 ausgeschaltet", etc.

Nachdem zuvor der Aufbau einer der in Fig. 1 dargestellten Netzübergangseinrichtungen, nämlich der Netzübergangseinrichtung GW1 an Hand von Fig. 2 beispielhaft erläutert worden ist und nachdem an Hand von Fig. 3 ein möglicher Aufbau einer Speicheranordnung MEM für die betreffende Netzübergangseinrichtung GW1 veranschaulicht worden ist, wird nunmehr auf das Verfahren gemäß der vorliegenden Erfindung näher eingegangen. Mit diesem Verfahren erfolgt eine Lokalisierung der Herkunft von die Erreichbarkeit und/oder den Betrieb von an der in Fig. 1 dargestellten ersten Netzwerkanordnung HB über Netzzugangseinrichtungen BCU1 bis BCUn angeschlossenen netzfähigen Hausgeräten HG1 bis HGn beeinträchtigenden Störungszuständen, die gegebenenfalls durch zumindest eines der betreffenden Hausgeräte HG1 bis HGn verursacht sind, welche an der genannten ersten Netzwerkanordnung HB angeschlossen sind. Mit dieser ersten Netzwerkanordnung HB ist zumindest eine zu wenigstens einer weiteren Netzwerkanordnung NET1 bis NETx hinführende Netzübergangseinrichtung, wie die Netzübergangseinrichtung GW1, verbunden, in der die Adressen der an der ersten Netzwerkanordnung HB angeschlossenen Hausgeräte HG1 bis HGn auf deren Anmeldung gespeichert werden.

Wie oben bereits erläutert, werden von den in wenigstens einer der Netzübergangseinrichtungen GW1 bis GWx jeweils angemeldeten Hausgeräten HG1 bis HGn in bestimmten festgelegten Zeitabständen deren Betriebszustände abgefragt und diesen entsprechende Abfragewerte in zumindest einer der jeweiligen Netzübergangseinrichtung GW1 bis GWx gespeichert. Dazu dienen gemäß Fig. 2 und 3 die in der jeweils in Frage kommenden Netzübergangseinrichtung, wie der Netzübergangseinrichtung GW1 vorgesehene Abfrageeinrichtung AB und die zugehörigen Speicher AN und ZU bzw. die in Fig. 3 dargestellte Speicheranordnung MEM.

Tritt nun in zumindest einem der in wenigstens einer der Netzübergangseinrichtungen GW1 bis GWx angemeldeten Hausgeräte, beispielsweise im Hausgerät HG1, welches die oben erwähnte Waschmaschine W1 sei, ein Störungszustand auf, gemäß dem das betreffende Hausgerät HG1 hinsichtlich seiner Erreichbarkeit und/oder hinsichtlich seines Betriebs als netzfähiges Hausgerät gestört ist, also die erste Netzwerkanordnung HB nicht mehr erreichen kann oder von dieser nicht mehr erreicht werden kann, und werden das Vorliegen dieses Störungszustandes und gegebenenfalls seine Dauer oder sein Anfangszeitpunkt über eine nicht gestörte Kommunikationsverbindung der jeweils in Frage kommenden Netzübergangseinrichtung, wie beispielsweise der Netzübergangseinrichtung GW1 gemeldet, so werden in dieser Netzübergangseinrichtung GW1 die Abfragewerte der in dieser angemeldeten Hausgeräte HG1 bis HGn innerhalb einer festlegbaren Abfrage-Zeitspanne erfasst. Diese Zeitspanne umfasst maximal diejenige Zeitspanne, innerhalb der in der Speicheranordnung MEM gemäß Fig. 3 Abfragewerte in dem Speicherspaltezustand abgespeichert sind. Die betreffende Zeitspanne kann aber auch gegebenenfalls einen kürzeren Zeitraum abdecken; sie kann frühestens zu dem Zeitpunkt beginnen, zu dem das jeweils gerade gestörte Hausgerät, also beim angenommenen Beispiel das Hausgerät HG1 bzw. die Waschmaschine W1, noch störungsfrei arbeitete. Dieser Zustand entspricht gemäß Fig. 3 dem Zeitpunkt hh1.mm3. Sämtliche nach diesem Zeitpunkt bis zum Zeitpunkt hh3.mm7 erfassten Abfragewerte können dann für eine Auswertung im Hinblick auf das Lokalisieren der Herkunft von Störungssignalen berücksichtigt werden, die die Erreichbarkeit und/oder den Betrieb des/der an der ersten Netzwerkanordnung angeschlossenen Hausgerätes/Hausgeräte beeinträchtigen.

An dieser Stelle sei angemerkt, dass das Vorliegen eines Störungszustands beispielsweise dadurch bemerkt worden sein kann, dass der Benutzer eines Hausgerätes versucht hat, mittels eines PCs von der in Fig. 1 dargestellten weiteren Netzwerkanordnung, wie z.B. NETn, auf das betreffende Hausgerät zuzugreifen und dass dies zeitweise oder gar gänzlich nicht möglich war. Für diesen Benutzer stellt sich dies als Vorliegen eines Störungszustands dar.

An Hand der so erfassten Abfragewerte können dann gemäß der vorliegenden Erfindung zumindest dasjenige Hausgerät, wie z.B. HGn, oder diejenigen Hausgeräte, die sich während der genannten Erfassungs-Zeitspanne in zumindest einer der Netzübergangseinrichtungen GW1 bis GWx neu angemeldet haben, als für die Verursachung des angemeldeten Störungszustandes in Frage kommende Hausgeräte bestimmt werden. In dem Fall, dass sich die betreffenden Hausgeräte nicht generell an sämtliche vorhandenen Netzübergangseinrichtungen GW1 bis GWx gemäß Fig. 1 anmelden, sondern lediglich in einer oder mehreren der betreffenden Netzübergangseinrichtungen, ist es erforderlich, die Abfragewerte bezüglich der jeweils in Frage kommenden Hausgeräte von sämtlichen an der ersten Netzwerkanordnung HB angeschlossenen Netzübergangseinrichtungen GW1 bis GWx für die vorzunehmende Auswertung zu erfassen.

Für diese zur Lokalisierung der Herkunft von Störungszuständen dienende Auswertung, die gemäß Fig. 2 von der in der dort dargestellten Netzübergangseinrichtung GW1 vorgesehenen Auswerteeinrichtung AU vorgenommen werden kann, erfolgt, wie oben bereits erwähnt, eine Kategorisierung bzw. Gruppenbildung der Abfragewerte entsprechend Störungsverursachungsklassen. So kann beispielsweise die Gruppe von neu angemeldeten Hausgeräten als oberste Störungsverursachungsklasse angesehen werden, gefolgt von der Gruppe der in Betrieb befindlichen Hausgeräte, welcher die Gruppe von Hausgeräten folgt, die als ausgeschaltet ermittelt worden sind. Diese Kategorisierung bzw. Klassifizierung der Hausgeräte entsprechend den jeweils ermittelten abgefragten Betriebszuständen kann sowohl hardware-mäßig als auch software-mäßig in zumindest einer der Netzübergangseinrichtungen vorgenommen werden. Es ist selbstverständlich aber auch möglich, die betreffende Erfassung der für einen Störungszustand jeweils in Frage kommenden Hausgeräte und die Angabe der für den jeweiligen Störungszustand als mögliche Störungsquellen in Frage kommenden Hausgeräte in einer mit einer der vorhandenen Netzübergangseinrichtungen GW1 bis GWx verbindbaren Steuerungs- und Auswerteeinrichtung, wie beispielsweise mittels des Personalcomputers PC1 vorzunehmen.

Wie eingangs erwähnt, können sich an die vorstehend erläuterten Schritte zur Lokalisierung der Herkunft von Störungszuständen Schritte zur eigentlichen Ermittlung der tatsächlichen Störquelle anschließen.

### Bezugszeichenliste

- AB: Abfrageeinrichtung
- AN: Anmeldungsspeicher
- AU: Auswerteeinrichtung
- B: Bedienelemente
- BCU1, BCUn: Nebenzugangseinrichtung, Buskoppeleinheit, Buskoppler
- CB1, CBn: Anschlussleitungen
- CPU: Zentraleinheit
- D: Anzeigeeinrichtung
- EA1, EA2: Eingangs-Ausgangs-Anschlüsse
- EI: Eingabeeinrichtung
- GW1, GWx: Netzübergangseinrichtung, Gateway
- HB: erste Netzwerkanordnung, Heim- bzw. Hausbus
- HG1, HGn: Gerät, Hausgerät
- IB: interner Bus
- IF1, IFn: Schnittstelleneinrichtung
- IFA: Schnittstelleneinrichtung
- IFx, IFy: Schnittstelleneinrichtung
- MEM: Speicheranordnung
- NET1, NETx: weitere Netzwerkanordnungen
- PC1, PCx: Steuerungs-/Überwachungsgerät, Personalcomputer
- PS: Spannungsversorgungseinrichtung
- RAM: Schreib-Lese-Speicher
- ROM: Festwertspeicher
- RP: Leseanschluss
- SL: mechanische Schalteinrichtung
- SP: Schalter
- ST: Steuereinrichtung
- WE: Weiterleitungseinrichtung
- WP: Schreibanschluss
- ZU: Zustandspeicher

## Patentansprüche

1. Verfahren zum Lokalisieren der Herkunft von Störungszuständen, die die Erreichbarkeit und/oder den Betrieb von an einer ersten Netzwerkanordnung (HB) über Netzzugangseinrichtungen (BCU1 bis BCUn) angeschlossenen Geräten (HG1 bis HGn) beeinträchtigen, wobei mit der ersten Netzwerkanordnung (HB) zumindest eine Netzübergangseinrichtung (GW1 bis GWx) verbunden ist, die zu wenigstens einer weiteren Netzwerkanordnung (NET1 bis NETx) hinführt, wobei in der Netzübergangseinrichtung (GW1 bis GWx) die Adressen der an der ersten Netzwerkanordnung (HB) angeschlossenen Geräte (HG1 bis HGn) auf deren Anmeldung in der jeweiligen Netzübergangseinrichtung (GW1 bis GWx) gespeichert werden, **dadurch gekennzeichnet, dass** von den in wenigstens einer der Netzübergangseinrichtungen (GW1 bis GWx) jeweils angemeldeten Geräten (HG1 bis HGn) in bestimmten festgelegten Zeitabständen Betriebszustände abgefragt werden, und dass diesen Betriebszuständen entsprechende Abfragewerte in wenigstens einer der Netzübergangseinrichtungen (GW1 bis GWx) gespeichert werden, dass bei Meldung des Vorliegens eines Störungszustands in zumindest einem der in wenigstens einer der Netzübergangseinrichtungen (GW1 bis GWx) angemeldeten Geräte (HG1 bis HGn) die Abfragewerte der in der jeweiligen Netzübergangseinrichtung (GW1 bis GWx) angemeldeten Geräte (HG1 bis HGn) innerhalb einer festlegbaren Abfrage-Zeitspanne für eine Auswertung erfasst werden, dass die Abfrage-Zeitspanne frühestens zu dem Zeitpunkt beginnt, zu dem das nunmehr gestörte Gerät (HG1) noch störungsfrei arbeitete, und dass die so erfassten Abfragewerte nach festlegbaren Kriterien in Gruppen zusammengestellt und die zu der jeweiligen Gruppe von Abfragewerten gehörenden Geräte (HG1 bis HGn) entsprechend einer festgelegten Reihenfolge der betreffenden Gruppen als für die Verursachung des gemeldeten Störungszustandes in Frage kommende Geräte (HGn) bestimmt werden.

2. Verfahren nach Anspruch 1, **dadurch gekennzeichnet, dass** die zu den jeweils zusammengestellten Gruppen gehörenden Geräte (HGn) gesondert angesteuert werden und dass im Zuge dieser Ansteuerung eine kontrollierte Überwachung des Betriebszustandes des Gerätes (HG1) vorgenommen wird, bezüglich dessen das Vorliegen eines Störungszustands gemeldet worden war.

3. Verfahren nach Anspruch 1 oder 2, **dadurch gekennzeichnet, dass** die Erfassung der genannten Geräte (HG1 bis HGn) und die Bestimmung der für den jeweils gemeldeten Störungszustand als mögliche Störungsquellen in Frage kommenden Geräte (HGn) in zumindest einer der vorhandenen Netzübergangseinrichtungen (GW1 bis GWx) erfolgen.

4. Verfahren nach Anspruch 1 oder 2, **dadurch gekennzeichnet, dass** Erfassung der genannten Geräte (HG1 bis HGn) und die Angabe der für die jeweils gemeldete Störung als mögliche Störungsquellen in Frage kommenden Geräte (HGn) in einer mit einer der vorhandenen Netzübergangseinrichtungen (GW1 bis GWx) verbindbaren Steuerungs- und Auswertungseinrichtung (PC1) festgelegt werden.

5. Verfahren nach einem der Ansprüche 1 bis 4, **dadurch gekennzeichnet, dass** die Abfragewerte von jedem der genannten Geräte (HG1 bis HGn) in einem in zumindest einer der Netzübergangseinrichtungen (GW1 bis GWx) vorgesehenen, als Durchlaufspeicher oder als Ringspeicher mit festgelegter bestimmter Speicherkapazität betriebenen Speicher (AN, ZU), der insbesondere aus geräteindividuellen Teilspeichern oder aus einem Speicher mit geräteindividuellen Speicherabschnitten besteht, gespeichert werden.

6. Verfahren nach einem der Ansprüche 1 bis 5, **dadurch gekennzeichnet, dass** die Geräte (HG1 bis HGn) netzfähige Hausgeräte sind.

7. Vorrichtung zur Durchführung des Verfahrens nach einem der Ansprüche 1 bis 6 zum Lokalisieren der Herkunft von Störungszuständen, die die Erreichbarkeit und/oder den Betrieb von an einer ersten Netzwerkanordnung (HB) über Netzzugangseinrichtungen (BCU1 bis BCUn) angeschlossenen Geräten (HG1 bis HGn), beeinträchtigen, wobei mit der ersten Netzwerkanordnung (HB) zumindest eine Netzübergangseinrichtung (GW1 bis GWx) verbunden ist, die zu wenigstens einer weiteren Netzwerkanordnung (NET1 bis NETx) hinführt, wobei in der Netzübergangseinrichtung (GW1 bis GWx) die Adressen der an der ersten Netzwerkanordnung (HB) angeschlossenen Geräte (HG1 bis HGn) auf deren Anmeldung in der jeweiligen Netzübergangseinrichtung (GW1 bis GWx) gespeichert sind, **dadurch gekennzeichnet, dass** in zumindest einer der Netzübergangseinrichtungen (GW1 bis GWx) eine Abfrage- und Speichereinrichtung (AB, AN, ZU) enthalten ist, in der Abfragewerte abspeicherbar sind, die den zu festgelegten Zeitpunkten abgefragten Zuständen der an der genannten ersten Netzwerkanordnung (HB) angeschlossenen Geräte (HG1 bis HGn) entsprechen, dass bei Meldung des Vorliegens eines Störungszustands in zumindest einem der in wenigstens einer der Netzübergangseinrichtungen (GW1 bis GWx) angemeldeten Geräte (HG1 bis HGn) von der Abfrage- und Speichereinrichtung (AB, AN, ZU) zumindest einer der Netzübergangseinrichtungen (GW1 bis GWx) die Abfragewerte der in der betreffenden Netzübergangseinrichtung (GW1 bis GWx) angemeldeten Geräte (HG1 bis HGn) innerhalb einer festlegbaren Abfrage-Zeitspanne für eine Auswertung bereitstellbar sind, dass die Abfrage-Zeitspanne frühestens zu dem Zeitpunkt beginnt, zu dem das nunmehr gestörte Gerät (HG1) noch störungsfrei arbeitete, und dass eine Auswerteeinrichtung (AU) vorgesehen ist, welche die so erfassten Abfragewerte nach festlegbaren Kriterien in Gruppen zusammenstellt und die zu der jeweiligen Gruppe von Abfragewerten gehörenden Geräte (HG1 bis HGn) entsprechend einer festgelegten Reihenfolge der betreffenden Gruppen als für die Verursachung des gemeldeten Störungszustandes in Frage kommende Geräte (HGn) bestimmt.

8. Vorrichtung nach Anspruch 7, **dadurch gekennzeichnet, dass** die Auswerteeinrichtung (AU) in zumindest einer der Netzübergangseinrichtungen (GW1 bis GWx) enthalten ist.

9. Vorrichtung nach Anspruch 7, **dadurch gekennzeichnet, dass** die Auswerteeinrichtung (PC1) mit der jeweiligen Netzübergangseinrichtung (GW1 bis GWx) verbindbar ist.

10. Vorrichtung nach Anspruch 9, **dadurch gekennzeichnet, dass** die Auswerteeinrichtung (PC1) mit einer der Netzübergangseinrichtungen (GW1 bis GWx) über eine gesonderte Netzwerkanordnung (NET1) verbindbar ist.

11. Vorrichtung nach einem der Ansprüche 7 bis 10, **dadurch gekennzeichnet, dass** für die Speicherung der jeweiligen Abfragewerte von jedem der genannten Geräte (HG1 bis HGn) ein in zumindest einer der Netzübergangseinrichtungen (GW1 bis GWx) angeordneter, als Durchlaufspeicher oder als Ringspeicher mit festgelegter bestimmter Speicherkapazität ausgelegter Speicher (AN, ZU) vorgesehen ist, der insbesondere durch geräteindividuelle Teilspeicher gebildet ist oder geräteindividuelle Speicherabschnitte enthält.

12. Vorrichtung nach einem der Ansprüche 7 bis 11, **dadurch gekennzeichnet, dass** die Geräte (HG1 bis HGn) netzfähige Hausgeräte sind.

## Claims

1. Method of localising the origin of disturbance states impairing the availability and/or the operation of appliances (HG1 to HGn) connected with a first network arrangement (HB) by way of network access devices (BCU1 to BCUn), wherein connected with the first network arrangement (HB) is at least one network transfer device (GW1 to GWx) which leads to at least one further network arrangement (NET1 to NETx), wherein the addresses of the appliances (HG1 to HGn) connected with the first network arrangement (HB) are stored in the network transfer device (GW1 to GWx) when they are logged onto the respective network transfer device (GW1 to GWx), **characterised in that** operational states of the appliances (HG1 to HGn) respectively logged onto at least one of the network transfer devices (GW1 to GWx) are interrogated at specific fixed time intervals and that interrogation values corresponding with these operational states are stored in at least one of the network transfer devices (GW1 to GWx), that when the presence of a disturbance state in at least one of the appliances (HG1 to HGn) logged onto at least one of the network transfer devices (GW1 to GWx) is reported the interrogation values of the appliances (HG1 to HGn) logged onto the respective network transfer device (GW1 to GWx) are detected within a fixable interrogation time span for evaluation, that the interrogation time span begins at the earliest at the point in time at which the now disturbed appliance (HG1) still operates free of disturbance and that the thus-detected interrogation values are combined into groups in accordance with fixable criteria and the appliances (HG1 to HGn) belonging to the respective group of interrogation values are determined, in correspondence with a fixed sequence of the respective groups, as appliances (HGn) coming into question as the cause of the reported disturbance state.

2. Method according to claim 1, **characterised in that** the appliances (HGn) belonging to the respective combined groups are separately controlled in drive and that in the course of this drive control a controlled monitoring of the operational state of the appliance (HG1) is undertaken with respect to which the presence of a disturbance state has been reported.

3. Method according to claim 1 or 2, **characterised in that** the detection of the stated appliances (HG1 to HGn) and the determination of the appliances (HGn) coming into question as possible disturbance source for the respectively reported disturbance state are carried out in at least one of the network transfer devices (GW1 to GWx) which are present.

4. Method according claim 1 or 2, **characterised in that** detection of the stated appliances (HG1 to HGn) and the statement of the appliances (HGn) coming into question as possible disturbance sources for the respectively reported disturbance are fixed in a control and evaluating device (PC1) connected with one of the network transfer devices (GW1 to GWx) which are present.

5. Method according to any one of claims 1 to 4, **characterised in that** the interrogation values of each of the stated appliances (HG1 to HGn) are stored in a memory (AN, ZU), which is provided in at least one of the network transfer devices (GW1 to GWx) and operated as a transit memory or as a ring memory with fixedly defined memory capacity and which consists particularly of part memories individual to appliance or of a memory with memory sections individual to appliance.

6. Method according to any one of claims 1 to 5, **characterised in that** the appliances (HG1 to HGn) are domestic appliances capable of mains operation.

7. Device for carrying out the method according to any one of claims 1 to 6 for localising the origin of disturbance states impairing the availability and/or the operation of appliances (HG1 to HGn) connected with a first network arrangement (HB) by way of network access devices (BCU1 to BCUn), wherein connected with the first network arrangement (HB) is at least one network transfer device (GW1 to GWx) which leads to at least one further network arrangement (NET1 to NETx), wherein the addresses of the appliances (HG1 to HGn) connected with the first network arrangement (HB) are stored in the network transfer device (GW1 to GWx) when they are logged onto the respective network transfer device (GW1 to GWx), **characterised in that** included in at least one of the network transfer devices (GW1 to GWx) is an interrogation and memory device (AB, AN, ZU) in which interrogation values, which correspond with the states - interrogated at fixed points in time - of the appliances (HG1 to HGn) connected with the said first network arrangement (HB), can be stored, that when the presence of a disturbance state in at least one of the appliances (HG1 to HGn) logged onto at least one of the network transfer devices (GW1 to GWx) is reported by the interrogation and memory device (AB, AN, ZU) of at least one of the network transfer devices (GW1 to GWx) the interrogation values of the appliances (HG1 to HGn) logged onto the relevant network transfer device (GW1 to GWx) can be provided within a fixable interrogation time span for evaluation, that the interrogation time span begins at the earliest at the point in time at which the now disturbed appliance (HG1) still operates free of disturbance and that an evaluating device (AU) is provided which combines the thus-detected interrogation values into groups in accordance with fixable criteria and, in correspondence with a fixed sequence of the groups concerned, determines the appliances (HG1 to HGn) belonging to the respective group of interrogation values as appliances (HGn) coming into question as the cause of the reported disturbance state.

8. Device according to claim 7, **characterised in that** the evaluating device (AU) is included in at least one of the network transfer devices (GW1 to GWx).

9. Device according to claim 7, **characterised in that** the evaluating device (PC1) is connectible with the respective network transfer device (GW1 to GWx).

10. Device according to claim 9, **characterised in that** the evaluating device (PC1) is connectible with one of the network transfer devices (GW1 to GWx) by way of a separate network arrangement (NET1).

11. Device according to any one of claims 7 to 10, **characterised in that** provided for storage of the respective interrogation values of each of the said appliances (HG1 to HGn) is a memory (AN, ZU), which is arranged in at least one of the network transfer devices (GW1 to GWx) and designed as a transit memory or as a ring memory with fixedly defined memory capacity and which is formed in particular by part memories individual to appliance or contains memory sections individual to appliance.

12. Device according to any one of claims 7 to 11, **characterised in that** the appliances (HG1 to HGn) are domestic appliances capable of mains operation.

## Revendications

1. Procédé pour localiser l'origine d'états de perturbation altérant l'accessibilité et/ou le fonctionnement d'appareils (HG1 à HGn) raccordés à un premier dispositif de réseau (HB) par l'intermédiaire de dispositifs d'accès au réseau (BCU1 à BCUn), au moins un dispositif passerelle (GW1 à GWx) étant raccordé au premier dispositif de réseau, ce dispositif passerelle menant à au moins un dispositif de réseau supplémentaire (NET1 à NETx), les adresses des appareils (HG1 à HGn) raccordés au premier dispositif de réseau (HB) étant mémorisées dans le dispositif passerelle (GW1 à GWx) suite à l'enregistrement des appareils, dans le dispositif passerelle (GW1 à GWx) respectif **caractérisé en ce que** des états de fonctionnement sont extraits, dans des intervalles de temps déterminés, par les appareils (HG1 à HGn) respectivement enregistrés dans au moins un des dispositif passerelle (GW1 à GWx), et **en ce que** des valeurs extraites correspondant à ces états de fonctionnement sont mémorisées dans au moins un des dispositifs passerelle (GW1 à GWx), **en ce que** lors de la signalisation de la présence d'un état de perturbation dans au moins un des appareils (HG1 à HGn) enregistrés dans au moins un des dispositifs passerelle (GW1 à GWx), les valeurs extraites des appareils (HG1 à HGn) enregistrés dans le dispositif passerelle respectif (GW1 à GWx) sont saisies pour une évaluation pendant une période d'interrogation déterminable, **en ce que** la période d'interrogation commence au plus tôt au moment auquel l'appareil désormais perturbé (HG1) fonctionnait encore sans perturbation, et **en ce que** les valeurs extraites ainsi saisies sont réunies en groupes selon des critères déterminables et **en ce que** les appareils (HG1 à HGn) appartenant au groupe respectif de valeurs extraites sont déterminés, conformément à un ordre défini des groupes concernés, en tant qu'appareils (HGn) entrant en ligne de compte pour la cause de l'état de perturbation signalé.

2. Procédé selon la revendication 1, **caractérisé en ce que** les appareils (HGn) appartenant aux groupes respectivement réunis sont commandés à part et **en ce qu'**au cours de cette commande, une surveillance contrôlée de l'état de fonctionnement de l'appareil (HG1) est exécutée, pour lequel la présence d'un état de perturbation avait été signalée.

3. Procédé selon la revendication 1 ou 2, **caractérisé en ce que** la saisie desdits appareils (HG1 à HGn) et la détermination des appareils (HGn) entrant en ligne de compte comme éventuelles sources de perturbation pour l'état de perturbation respectivement signalé sont réalisées dans au moins un des dispositifs passerelle présents (GW1 à GWx).

4. Procédé selon la revendication 1 ou 2, **caractérisé en ce que** la saisie desdits appareils (HG1 à HGn) et l'indication des appareils (HGn) entrant en ligne de compte comme éventuelles sources de perturbation pour l'état de perturbation respectivement signalé sont déterminées dans un dispositif de commande et d'évaluation (PC1) raccordable à l'un des dispositifs passerelle présents (GW1 à GWx).

5. Procédé selon l'une quelconque des revendications 1 à 4, **caractérisé en ce que** les valeurs extraites de chacun des dits appareils (HG1 à HGn) sont mémorisées dans une mémoire (AN, ZU) prévue dans au moins un des dispositifs passerelle (GW1 à GWx) et opérée comme mémoire passage ou comme mémoire tampon circulaire à capacité de mémoire déterminée fixée, qui est constituée notamment de mémoires partielles individuelles aux appareils ou d'une mémoire comprenant des sections de mémoire individuelles aux appareils.

6. Procédé selon l'une quelconque des revendications 1 à 5, **caractérisé en ce que** les appareils (HG1 à HGn) sont des appareils ménagers pouvant être mis en réseau.

7. Dispositif pour la réalisation du procédé selon l'une quelconque des revendications 1 à 6 pour localiser l'origine d'états de perturbation altérant l'accessibilité et/ou le fonctionnement d'appareils (HG1 à HGn) raccordés à un premier dispositif de réseau (HB) par l'intermédiaire de dispositifs d'accès au réseau (BCU1 à BCUn), au moins un dispositif passerelle (GW1 à GWx) étant raccordé au premier dispositif de réseau (HB), ce dispositif passerelle menant à au moins un dispositif de réseau supplémentaire (NET1 à NETx), les adresses des appareils (HG1 à HGn) raccordés au premier dispositif de réseau (HB) étant mémorisées dans le dispositif passerelle (GW1 à GWx) suite à l'enregistrement des appareils, dans le dispositif passerelle (GW1 à GWx) respectif **caractérisé en ce qu'**un dispositif d'extraction et de mémorisation (AB, AN, ZU), dans lequel des valeurs extraites sont mémorisables, est compris dans au moins un des dispositifs passerelle (GW1 à GWx), ces valeurs extraites correspondant aux états, interrogés à des moments déterminés, des appareils (HG1 à HGn) raccordés au dit premier dispositif de réseau (HB), **en ce qu'**en cas de signalisation de la présence d'un état de perturbation dans au moins un des appareils (HG1 à HGn) enregistrés dans au moins un des dispositifs passerelle (GW1 à GWx), les valeurs extraites des appareils (HG1 à HGn) enregistrés dans le dispositif passerelle concerné (GW1 à GWx) peuvent être fournies pour une évaluation par le dispositif d'extraction et de mémorisation (AB, AN, ZU) d'au moins un dispositif passerelle (GW1 à GWx) dans une période d'interrogation déterminable, **en ce que** la période d'interrogation commence au plus tôt au moment auquel l'appareil désormais perturbé (HG1) fonctionnait encore sans perturbation, et **en ce qu'**un dispositif d'évaluation (AU) est prévu, lequel réunit en groupes selon des critères déterminables les valeurs extraites ainsi saisies et détermine les appareils (HG1 à HGn) appartenant au groupe respectif de valeurs extraites, conformément à une série déterminée des groupes concernés, en tant qu'appareils (HGn) entrant en ligne de compte pour la cause de l'état de perturbation signalé.

8. Dispositif selon la revendication 7, **caractérisé en ce que** le dispositif d'évaluation (AU) est compris dans au moins un des dispositifs passerelle (GW1 à GWx).

9. Dispositif selon la revendication 7, **caractérisé en ce que** le dispositif d'évaluation (PC1) est raccordable au dispositif passerelle respectif (GW1 à GWx).

10. Dispositif selon la revendication 9, **caractérisé en ce que** le dispositif d'évaluation (PC1) est raccordable à un des dispositifs passerelle (GW1 à GWx) par l'intermédiaire d'un dispositif de réseau à part (NET1).

11. Dispositif selon l'une quelconque des revendications 7 à 10, **caractérisé en ce qu'**une mémoire (AN, ZU) disposée dans au moins un des dispositifs passerelle (GW1 à GWx) et conçue comme mémoire passage ou comme mémoire tampon circulaire, à capacité de mémoire déterminée fixée, est prévue pour la mémorisation des valeurs extraites respectives par chacun des dits appareils (HG1 à HGn), cette mémoire étant notamment formée par des mémoires partielles individuelles aux appareils ou par des sections de mémoire individuelles aux appareils.

12. Dispositif selon l'une quelconque des revendications 7 à 11, **caractérisé en ce que** les appareils (HG1 à HGn) sont des appareils ménagers pouvant être mis en réseau.
